# EUROPEAN PATENT SPECIFICATION

(11) **EP 3 192 752 B1**
(45) Date of publication and mention of the grant of the patent: **02.04.2025**
(21) Application number: 17151485.4
(22) Date of filing: 13.01.2017
(51) Int. Cl.: B65G 1/04, B23D 23/00, B23D 47/04, B27B 31/00

(54) **DEVICE FOR AUTOMATIC DELIVERY FROM A WAREHOUSE RACK OF A PIECE OF A DESIRED LENGTH OF A DESIRED BAR MATERIAL**
VORRICHTUNG ZUR AUTOMATISCHEN BEREITSTELLUNG EINES TEILS MIT GEWÜNSCHTER LÄNGE UND GEWÜNSCHTEM STANGENMATERIAL VON EINEM LAGERGESTELL
DISPOSITIF DE LIVRAISON AUTOMATIQUE D'UNE LONGUEUR DÉSIRÉE DE BARRE MÉTALLIQUE PRÉLEVÉE SUR UNE ÉTAGÈRE D'ENTREPÔT

(30) Priority: 13.01.2016 NL 2016089
(43) Date of publication of application: 19.07.2017
(73) Proprietor: Overbeek, Jan Willem Josef, 7495 SP Ambt Delden (NL)
(72) Inventor: Overbeek, Jan Willem Josef, 7495 SP Ambt Delden (NL)
(74) Representative: Verhees, Godefridus Josephus Maria

(56) References cited:
- DE-A1- 2 144 651
- JP-U- S6 345 705

## Description

### Field of the invention

The invention relates to an automatic bar material delivering device for automatic delivery from a warehouse rack of a piece of desired length of a desired bar material, comprising:
- a warehouse rack having a front side from which an end of the bar material present in the warehouse rack is projected during use,
- a control unit into which data of the desired bar material can be entered,
- means to enter data of the desired bar material into the control unit,
- gripping means, which can grip a desired bar material, as well as
- first transfer means which are capable of transferring the gripping means to the desired bar material and, once the desired bar material has been gripped, which are capable of pulling the desired bar material from the warehouse rack.

### State of the art

For obtaining a piece of desired length of a desired bar from a storage compartment in a similar known warehouse rack, first the desired bar is pulled out of the warehouse rack and clamped in a clamping device. Subsequently, a piece of the correct length is sawn off after which the bar is inserted back into the proper storage compartment. This is a rather circumstantial and laborious way of obtaining a piece of bar of desired length from the warehouse rack.

A device according to the preamble of claim 1 is known from JP363045705U. This known device is an automatic loading / unloading device of long items in and from a storage rack.

### Summary of the invention

It is an object of the invention to provide a device of the type defined in the opening paragraph by which in an easier, faster and less circumstantial manner a piece of a desired bar of desired length can be obtained from the warehouse rack. For this purpose the device according to the invention is characterized in that it comprises:
- shortening means for separating a part of the pulled-out bar material projecting from the warehouse rack from the rest of the bar material, and
- second transfer means which are capable of transferring the shortening means to the desired bar material at the front side of the warehouse rack, and also characterised in that data of the desired length of the desired bar material can also be entered into the control unit,

said control unit being configured so that after the data of the desired bar material and the desired length have been entered into the control unit, the unit searches the entered data for the location of the desired bar material and subsequently drives the first transfer means so that the gripping means are positioned in front of the end of the desired bar; then the second transfer means are driven so that the gripping means are located in front of the end of the bar and grip the bar, and
thereafter the gripping means are pulled away from the warehouse rack by the transfer means over a distance equal to the desired bar length and the gripped piece of the bar is separated from the bar by the shortening means.

After the data of the desired bar material and the desired length have been entered into the control unit, the unit searches the entered data for the location of the desired bar material and subsequently drives the first transfer means so that the gripping means are positioned in front of the end of the desired bar. Then the second transfer means are driven so that the gripping means are located in front of the end of the bar and grip the bar. Thereafter the gripping means are pulled away from the warehouse rack by the transfer means over a distance equal to the desired bar length and the gripped piece of the bar is separated from the bar by the shortening means. These shortening means are operated fully automatically by the control unit.

DE 2 144 651 A1 discloses a warehouse rack with a power saw at distance from the front of the warehouse rack to saw bars that have been completely removed from the warehouse rack. JP S63 45705 U discloses an automatic bar material delivering device according to the preamble of claim 1.

Preferably, the control unit further is configured to control the shortening means to automatically separate the pulled out desired length of the desired bar material from the rest of this bar material.

The shortening means may be formed by sawing, grinding or cutting means. The shortening means preferably comprise a circular power saw, which can be transferred in a direction perpendicular to the longitudinal direction of the bar material. The gripping means may comprise for example a clamping device or a magnet in the case where magnetic bar material is concerned.

The warehouse rack is divided for example into parallel storage compartments for the bar material, which storage compartments extend over the depth of the warehouse rack, and the front side is preferably divided into sections which form separate outlets of the storage compartments.

An advantageous embodiment of the device according to the invention is characterized in that the device comprises:
- an elongated first slide which extends in longitudinal direction along the front side of the warehouse rack and can be transferred in a first direction along the front side of the warehouse rack and perpendicular to the longitudinal direction, as well as
- a second elongated slide which extends in longitudinal direction perpendicular to the front side of the warehouse rack and can be transferred along the first slide in a direction parallel to the longitudinal direction of the first slide,
- a third slide which can be transferred in a direction parallel to the longitudinal direction of the second slide, and
- a fixedly mounted guide along which the first slide can be transferred,
where the shortening means are fixedly mounted to the second slide at the second slide's end present near the front side of the warehouse rack and the first transfer means are capable of transferring the first and the second slide, and where the gripping means are located on the third slide and the second transfer means are capable of transferring the third slide.

The fixedly mounted guide may be located both above and below the front side of the warehouse rack and extend in horizontal direction. In that case the first slide is transferred in horizontal direction and the second slide is then transferred in vertical direction along the first slide. Preferably, however, the fixedly mounted guide extends vertically in longitudinal direction and is located beside the front side of the warehouse rack. The first slide then extends horizontally and is transferred in vertical direction along the guide and the second slide is then transferred horizontally along the first slide.

### Brief description of the drawings

The invention will be further explained below while reference is made to an example of embodiment of the device according to the invention shown in the appended drawings, in which:
Fig. 1 shows an embodiment of the device according to the invention in a perspective view; and
Fig. 2 shows a side view of the device shown in Fig. 1.

### Detailed description of the drawings

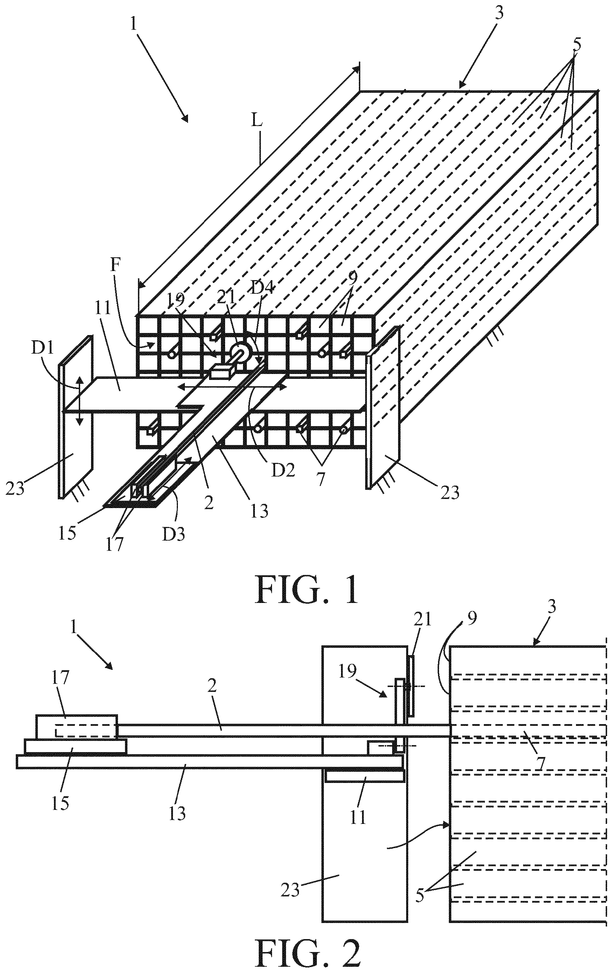

Fig. 1 shows an embodiment of the device according to the invention in a perspective view. The device 1 comprises a warehouse rack 3 known per se which is divided into parallel elongated storage compartments 5 for bar material 7. These storage compartments extend over a depth L of the warehouse rack. The warehouse rack has a front side F which is divided into sections which form separate outlet openings 9 of the storage compartments 5. During operation the bar material 7 is located in the storage compartments where an end of the bars is projected from the front side so as to provide simple gripping opportunities.

The device further includes means for taking a desired bar out of the warehouse rack. These means comprise gripping means 17 for gripping a bar and three slides 11 - 15 which can be transferred in three vertical inter-perpendicular directions D1 - D3 for transferring the gripping means. A first slide 11 of said three slides is elongated and extends in horizontal direction along the front side F of the warehouse rack 3. This first slide 11 can be transferred in vertical direction D1 along a vertical fixedly mounted guide 23. A second slide 13 of said three slides is also elongated and extends perpendicular to the front side F of the warehouse rack 3. This second slide 13 is led across the first slide and can be transferred in horizontal direction D2 parallel to the longitudinal direction of the first slide and parallel to the front side of the warehouse rack. A third slide 15 of said three slides is led over the first slide 11 and can be transferred in horizontal direction D3 parallel to the longitudinal direction of the second slide 13 and perpendicular to the front side F of the warehouse rack. The gripping means 17 are located on the third slide 15.

The second slide 13 accommodates at the end near the front side F of the warehouse rack 3 fixedly mounted fully automatic shortening means 19 for shortening pieces of bar material to desired lengths. These shortening means 19 comprise a circular power saw 21 which can be transferred in a direction D4 perpendicular to the longitudinal direction of the bar material.

Fig. 2 shows a side view of the device shown in Fig. 1 in which the front vertical guide has been omitted. Delivery of a piece of bar material of desired length is effected as follows. Subsequent to entering data of the desired bar material and the desired length into a control unit (not shown), the control unit searches the entered data for the compartment the desired bar material is stored in. Then the control unit drives transfer means (not shown either) so that the first and the second slide 11 and 13 transfer the third slide 15 with the gripping means 17 mounted to it to the front of the desired bar 7. Thereafter, the third slide is transferred to the front side F of the warehouse rack 3 until the gripping means 17 are positioned around the end of the bar. Then the bar 7 is clamped and the gripping means are transferred along the second slide over a distance equal to the desired length while the bar is pulled out of the storage compartment. Then the clamped piece of the bar 7 is sawn off by the sawing means 19.

Although the invention has been described in the foregoing based on the drawings, it should be observed that the invention is not by any manner or means restricted to the embodiment shown in the drawings. The invention also extends to all embodiments deviating from the embodiment shown in the drawings within the scope defined by the appended claims.

## Claims

1. An automatic bar material delivering device (1) for automatic delivery from a warehouse rack of a piece (2) of desired length of a desired bar material, comprising:
- a warehouse rack (3) having a front side (F) from which an end of the bar material (7) present in the warehouse rack is projected during use,
- a control unit into which data of the desired bar material can be entered,
- gripping means (17), which can grip a desired bar material, as well as
- first transfer means which are capable of transferring the gripping means to the desired bar material and, once the desired bar material has been gripped, which are capable of pulling the desired bar material from the warehouse rack,
**characterized in that**, the device (1) further comprises:
- shortening means (19) for separating a part of the pulled-out bar material projecting from the warehouse rack from the rest of the bar material,
- second transfer means which are capable of transferring the shortening means to the desired bar material at the front side (F) of the warehouse rack, and also **characterised in that** data of the desired length of the desired bar material can also be entered into the control unit, said control unit being configured so that after the data of the desired bar material and the desired length have been entered into the control unit, the unit searches the entered data for the location of the desired bar material and subsequently drives the first transfer means so that the gripping means are positioned in front of the end of the desired bar; then the second transfer means are driven so that the gripping means are located in front of the end of the bar and grip the bar, and thereafter the gripping means are pulled away from the warehouse rack by the transfer means over a distance equal to the desired bar length and the gripped piece of the bar is separated from the bar by the shortening means.

2. Device (1) as claimed in claim 1, **characterized in that** the control unit further is configured to control the shortening means (19) to automatically separate the pulled out desired length of the desired bar material from the rest of this bar material.

3. Device (1) as claimed in claim 1 or 2, **characterized in that** the warehouse rack (3) is divided into parallel storage compartments (5) for bar material (7), the storage compartments extending over the depth (L) of the warehouse rack, where the front side (F) is divided into sections forming separate outlets (9) of the storage compartments.

4. Device (1) as claimed in claim 1, 2 or 3, **characterized in that** the device (1) comprises:
- an elongated first slide (11) which extends in longitudinal direction along the front side (F) of the warehouse rack (3) and can be transferred in a first direction (D1) along the front side of the warehouse rack and perpendicular to the longitudinal direction, as well as
- a second elongated slide (13) which extends in longitudinal direction perpendicular to the front side (F) of the warehouse rack (3) and can be transferred along the first slide (11) in a direction (D2) parallel to the longitudinal direction of the first slide,
- a third slide (15) which can be transferred in a direction (D3) parallel to the longitudinal direction of the second slide (13), and
- a fixedly mounted guide (23) along which the first slide (11) can be transferred,
where the shortening means (19) are fixedly mounted to the second slide (13) at the second slide's end present near the front side (F) of the warehouse rack (3) and the first transfer means are capable of transferring the first and the second slide, and where the gripping means (17) are located on the third slide (15) and the second transfer means are capable of transferring the third slide.

5. Device (1) as claimed in 4, **characterized in that** the fixedly mounted guide (23) extends vertically in longitudinal direction.

6. Device (1) as claimed in any one of the preceding claims, **characterized in that** the shortening means (19) comprise a circular power saw (21), which can be transferred in a direction (D4) perpendicular to the longitudinal direction of the bar material.

## Patentansprüche

1. Eine automatische Stangenmaterial-Liefervorrichtung (1) zur automatischen Lieferung eines Stücks (2) einer gewünschten Länge eines gewünschten Stangenmaterials aus einem Lagerregal, umfassend:
- ein Lagerregal (3) mit einer Vorderseite (F), aus der während des Gebrauchs ein Ende des im Lagerregal vorhandenen Stangenmaterials (7) herausragt,
- eine Steuereinheit, in die Daten des gewünschten Stangenmaterials eingegeben werden können,
- Greifmittel (17), die ein gewünschtes Stangenmaterial greifen können, sowie
- erste Transfermittel, die in der Lage sind, die Greifmittel auf das gewünschte Stangenmaterial zu übertragen und, nachdem das gewünschte Stangenmaterial gegriffen wurde, die in der Lage sind, das gewünschte Stangenmaterial aus dem Lagerregal zu ziehen,
**dadurch gekennzeichnet, dass** die Vorrichtung (1) ferner umfasst:
- Kürzungsmittel (19) zum Trennen eines Teils des herausgezogenen Stangenmaterials, das aus dem Lagerregal herausragt, vom Rest des Stangenmaterials, und
- zweite Transfermittel, die in der Lage sind, die Kürzungsmittel auf das gewünschte Stangenmaterial an der Vorderseite (F) des Lagerregals zu übertragen,
und außerdem **dadurch gekennzeichnet, dass** in die Steuereinheit auch Daten der gewünschten Länge des gewünschten Stangenmaterials eingegeben werden können,
wobei die Steuereinheit so konfiguriert ist, dass, nachdem Daten der gewünschten Länge des gewünschten Stangenmaterials in die Steuereinheit eingegeben wurden, die Einheit die eingegebenen Daten nach der Position des gewünschten Stangenmaterials durchsucht und anschließend die ersten Transfermittel so antreibt, dass die Greifmittel vor dem Ende der gewünschten Stange positioniert sind;
dann werden die ersten Transfermittel so angetrieben, dass die Greifmittel vor dem Ende der Stange positioniert sind und die Stange greifen, und
danach werden die Greifmittel durch die ersten Transfermittel über eine Distanz, die der gewünschten Stangenlänge entspricht, vom Lagergestell weggezogen und das gegriffene Stück der Stange durch die Verkürzungsmittel von der Stange getrennt.

2. Vorrichtung (1) nach Anspruch 1, **dadurch gekennzeichnet, dass** die Steuereinheit weiterhin so konfiguriert ist, dass sie die Verkürzungsmittel (19) ansteuert, um die herausgezogene gewünschte Länge des gewünschten Stangenmaterials automatisch vom Rest dieses Stangenmaterials zu trennen.

3. Vorrichtung (1) nach Anspruch 1 oder 2, **dadurch gekennzeichnet, dass** das Lagerregal (3) in parallele Lagerfächer (5) für Stangenmaterial (7) unterteilt ist, wobei sich die Lagerfächer über die Tiefe (L) des Lagerregals erstrecken, wobei die Vorderseite (F) in Abschnitte unterteilt ist, die separate Auslässe (9) der Lagerfächer bilden.

4. Vorrichtung (1) nach Anspruch 1, 2 oder 3, **dadurch gekennzeichnet, dass** die Vorrichtung (1) umfasst:
- eine längliche erste Schiene (11), die sich in Längsrichtung entlang der Vorderseite (F) des Lagerregals (3) erstreckt und in einer ersten Richtung (D1) entlang der Vorderseite des Lagerregals und senkrecht zur Längsrichtung bewegt werden kann, sowie
- eine zweite längliche Schiene (13), die sich in Längsrichtung senkrecht zur Vorderseite (F) des Lagerregals (3) erstreckt und entlang der ersten Schiene (11) in einer Richtung (D2) parallel zur Längsrichtung der ersten Schiene bewegt werden kann,
- eine dritte Schiene (15), die in einer Richtung (D3) parallel zur Längsrichtung der zweiten Schiene (13) bewegt werden kann, und
- eine fest montierte Führung (23), entlang der die erste Schiene (11) bewegt werden kann,
wobei die Verkürzungsmittel (19) an dem Ende der zweiten Schiene, das sich in der Nähe der Vorderseite (F) des Lagerregals (3) befindet, fest an der zweiten Schiene (13) montiert sind und die ersten Transfermittel in der Lage sind, die erste und die zweite Schiene zu transferieren, und wobei sich die Greifmittel (17) an der dritten Schiene (15) befinden und die zweiten Transfermittel in der Lage sind, die dritte Schiene zu transferieren.

5. Vorrichtung (1) nach Anspruch 4, **dadurch gekennzeichnet, dass** die fest montierte Führung (23) vertikal in Längsrichtung verläuft.

6. Vorrichtung (1) nach einem der vorhergehenden Ansprüche, **dadurch gekennzeichnet, dass** die Verkürzungsmittel (19) eine Kreissägemaschine (21) umfassen, die in einer Richtung (D4) senkrecht zur Längsrichtung des Stangenmaterials transferiert werden kann.

## Revendications

1. Dispositif de distribution automatique de matériau en barre (1) pour la livraison automatique à partir d'un rayonnage d'entrepôt d'une pièce (2) de longueur souhaitée d'un matériau en barre souhaité, comprenant :
- un rayonnage d'entrepôt (3) ayant une face avant (F) à partir de laquelle une extrémité du matériau en barre (7) présent dans le rayonnage d'entrepôt est projetée pendant l'utilisation,
- une unité de commande dans laquelle les données du matériau en barre souhaité peuvent être saisies,
- des moyens de préhension (17), qui peuvent saisir un matériau de barre souhaité, ainsi que
- des premiers moyens de transfert qui sont capables de transférer les moyens de préhension vers le matériau en barre souhaité et, une fois le matériau en barre souhaité saisi, qui sont capables de tirer le matériau en barre souhaité du rayonnage de l'entrepôt,
**caractérisé en ce que** le dispositif (1) comprend en outre :
- des moyens de raccourcissement (19) pour séparer une partie du matériau en barre extrait, dépassant du rayonnage d'entrepôt, du reste du matériau en barre, et
- des seconds moyens de transfert qui sont capables de transférer les moyens de raccourcissement vers le matériau en barre souhaité sur le côté avant (F) du rayonnage d'entrepôt,
et également **caractérisé en ce que** les données de la longueur souhaitée du matériau en barre souhaité peuvent également être saisies dans l'unité de commande,
ladite unité de commande étant configurée de telle sorte qu'après que les données de la longueur souhaitée du matériau de barre souhaité ont été entrées dans l'unité de commande, l'unité recherche les données saisies pour l'emplacement du matériau de barre souhaité et entraîne ensuite le premier moyen de transfert de sorte que les moyens de préhension soient positionnés devant l'extrémité de la barre souhaitée ;
puis on entraîne les premiers moyens de transfert pour que les moyens de préhension soient situés devant l'extrémité de la barre et saisissent la barre, et
ensuite, les moyens de préhension sont éloignés du rayonnage d'entrepôt par les premiers moyens de transfert sur une distance égale à la longueur de barre souhaitée et la pièce saisie de la barre est séparée de la barre par les moyens de raccourcissement.

2. Dispositif (1) selon la revendication 1, **caractérisé en ce que** l'unité de commande est en outre configurée pour commander les moyens de raccourcissement (19) afin de séparer automatiquement la longueur souhaitée extraite du matériau de barre souhaité du reste de ce matériau de barre.

3. Dispositif (1) selon la revendication 1 ou 2, **caractérisé en ce que** le rayonnage d'entrepôt (3) est divisé en compartiments de stockage parallèles (5) pour le matériel en barre (7), les compartiments de stockage s'étendant sur la profondeur (L) du rayonnage d'entrepôt, où la face avant (F) est divisée en sections formant des sorties séparées (9) des compartiments de stockage.

4. Dispositif (1) selon la revendication 1, 2 ou 3, **caractérisé en ce que** le dispositif (1) comprend :
- une première glissière allongée (11) qui s'étend dans la direction longitudinale le long du côté avant (F) du rayonnage d'entrepôt (3) et peut être transférée dans une première direction (D1) le long du côté avant du rayonnage d'entrepôt et perpendiculairement à la direction longitudinale, ainsi que
- une seconde glissière allongée (13) qui s'étend dans une direction longitudinale perpendiculaire au côté avant (F) du rayonnage d'entrepôt (3) et peut être transférée le long de la première glissière (11) dans une direction (D2) parallèle à la direction longitudinale de la première glissière,
- un troisième coulisseau (15) transférable selon une direction (D3) parallèle à la direction longitudinale du deuxième coulisseau (13), et
- un guide (23) monté fixe le long duquel le premier coulisseau (11) peut être transféré,
les moyens de raccourcissement (19) sont montés de manière fixe sur la seconde glissière (13) au niveau de l'extrémité de la seconde glissière présente près du côté avant (F) du rayonnage d'entrepôt (3) et les premiers moyens de transfert sont capables de transférer la première et la seconde glissière, et les moyens de préhension (17) sont situés sur la troisième glissière (15) et les seconds moyens de transfert sont capables de transférer la troisième glissière.

5. Dispositif (1) selon la revendication 4, **caractérisé en ce que** le guide monté fixe (23) s'étend verticalement dans le sens longitudinal.

6. Dispositif (1) selon l'une quelconque des revendications précédentes, **caractérisé en ce que** les moyens de raccourcissement (19) comprennent une scie mécanique circulaire (21), qui peut être transférée dans une direction (D4) perpendiculaire à la direction longitudinale du matériau en barre.
